# EUROPÄISCHE PATENTANMELDUNG

(11) **EP 2 868 889 A1**
(43) Veröffentlichungstag der Anmeldung: **06.05.2015**
(21) Anmeldenummer: 14187750.6
(22) Anmeldetag: 06.10.2014
(51) Int. Cl.: F01N 13/08, F01N 13/18, F16L 13/14, F16L 7/00

(54) **Verbindung von Leitungselementen**

(30) Priorität: 31.10.2013 DE 202013104876 U
(71) Anmelder: Witzenmann GmbH, 75175 Pforzheim (DE)
(72) Erfinder: Pluschke, Michael, 75305 Neuenbürg (DE)
(74) Vertreter: Lemcke, Brommer & Partner Patentanwälte Partnerschaft mbB

(57) **Zusammenfassung**

Vorgeschlagen wird eine Verbindung zwischen zwei konzentrisch angeordneten Leitungselementen (2, 3), insbesondere für ein Entkoppelelement für die Abgasanlage eines Kraftfahrzeugs mit Verbrennungsmotor, bei der ein erstes, inneres Leitungselement (2) und ein zweites, äußeres Leitungselement (3) im Bereich (4) einer radialen Aufweitung (5) miteinander verpresst sind, welche Verbindung sich dadurch auszeichnet, dass wenigstens eine negative Umlenkung (6a, 6b) der beiden Leitungselemente (2, 3) radial nach innen und/oder eine axiale Verformung der Aufweitung (5) vorgesehen ist bzw. sind.

## Beschreibung

Die Erfindung betrifft die Verbindung zwischen zwei konzentrisch angeordneten Leitungselementen nach dem Oberbegriff des Anspruchs 1, insbesondere für ein Entkoppelelement für die Abgasanlage eines Kraftfahrzeugs mit Verbrennungsmotor, bei der ein erstes, inneres Leitungselement und ein zweites, äußeres Leitungselement im Bereich einer radialen Aufweitung miteinander verpresst und somit kraftschlüssig verbunden sind.

Weiterhin betrifft die Erfindung ein Entkoppelelement für die Abgasanlage eines Kraftfahrzeugs mit Verbrennungsmotor gemäß dem Oberbegriff des Anspruchs 12 und eine Weiterentwicklung des Abgasleitungselements gemäß WO 2009/056213 A1 gemäß dem Oberbegriff des Anspruchs 13.

Insbesondere die zuletzt genannte WO-Offenlegungsschrift zeigt ein Entkoppelelement für die Abgasanlage eines Kraftfahrzeugs mit Verbrennungsmotor, welches ein Außenrohr und ein Innenrohr aufweist, wobei das Außenrohr zwei beabstandete Wellerohrabschnitte umfasst und das Innenrohr als Agraff- oder Wickelschlauch ausgebildet ist. Bei solchen Abgasleitungselementen - jedoch ohne Beschränkung hierauf - ist es regelmäßig erforderlich, das Außenrohr und das Innenrohr in einem mittleren Bereich der Anordnung zwischen zwei Wellrohrabschnitten des Außenrohrs miteinander zu verbinden.

Nach dem Stand der Technik wird diese Verbindung mittels Form- und Kraftschluss durch mechanisches Verpressen ausgeführt. Dabei hat sich allerdings als nachteilig erwiesen, dass bei entsprechender Beanspruchung, zum Beispiel bei Temperaturwechsel oder Zug-Biege-Belastungen, sich die Anbindung lösen kann, so dass anschließend Relativbewegungen zwischen Innenrohr (Wickelschlauch oder Liner) und Außenrohr (Glattrohrzylinder) stattfinden können. Dies kann durch lokalen Reibverschleiß zu einem vorzeitigen Ausfall des Entkoppelelements führen.

Darüber hinaus ist es zur Realisierung der bekannten Anbindung erforderlich, sowohl das Innenrohr (Liner) als auch das Außenrohr (Glattrohrzylinder) in dem genannten mittleren Bereich zwischen zwei Wellrohrabschnitten (Balgpaketen) aufzuweiten und dadurch zu verpressen. Dabei hat sich zusätzlich als nachteilig erwiesen, dass durch die beschriebene Aufweitung die Beweglichkeit des Innenrohrs (Linerbeweglichkeit) beeinträchtigt wird.

Der Erfindung liegt die Aufgabe zugrunde, unter Vermeidung der vorstehend aufgeführten Nachteile eine Lösung anzugeben, welche die Verbindung eines ersten, inneren Leitungselements (Innenrohr) mit einem zweiten, äußeren Leitungselement (Außenrohr) ermöglicht, welche Verbindung derart sicher ausgebildet sein soll, dass keine Relativbewegung zwischen den genannten Leitungselementen in dem verbundenen Bereich stattfinden kann, und wobei weiterhin eine Linerbeweglichkeit gegebenenfalls nicht beeinträchtigt werden soll.

Die Aufgabe wird gelöst mittels einer Verbindung nach den Merkmalen des Anspruchs 1, mittels eines Entkoppelelements mit den Merkmalen des Anspruchs 12 und mittels eines Abgasleitungselements mit den Merkmalen des Anspruchs 13.

Vorteilhafte Weiterbildungen der Erfindung sind Gegenstand von Unteransprüchen, welche bevorzugte Ausgestaltungen der grundlegenden erfinderischen Idee in vorteilhafter Weise weiterbilden.

Erfindungsgemäß ist eine Verbindung zwischen zwei konzentrisch angeordneten Leitungselementen, insbesondere für ein Entkoppelelement für die Abgasanlage eines Kraftfahrzeugs mit Verbrennungsmotor, bei der ein erstes, inneres Leitungselement und ein zweites, äußeres Leitungselement im Bereich einer radialen Aufweitung miteinander verpresst sind, gekennzeichnet durch wenigstens eine negative Umlenkung der beiden Leitungselemente radial nach innen und/oder eine axiale Verformung der gesamten Aufweitung.

In diesem Zusammenhang bedeutet der Begriff "radiale Aufweitung", dass die beiden Leitungselemente in einem Bereich der Leitungselementenanordnung gemeinsam radial nach außen bezüglich einer Längsachse der Leitungselementenanordnung verformt und in diesem Bereich miteinander verpresst sind. Vorzugsweise ist die radiale Aufweitung über den gesamten Umfang der Leitungselementenanordnung umlaufend ausgebildet und entspricht einer lokalen Querschnittsvergrößerung beider Leitungselemente.

Im Rahmen der vorliegenden Beschreibung ist eine solche radiale Aufweitung auch als eine "positive Umlenkung" der beiden Leitungselemente nach außen aufzufassen. Dagegen bezeichnet eine "negative Umlenkung" der beiden Leitungselemente eine gemeinsame Umformung der beiden Leitungselemente nach innen in einem Bereich, so dass sich in diesem Bereich eine Querschnittsverringerung der Leitungselementenanordnung ergibt. "Positiv" bedeutet in diesem Zusammenhang also weg von einer Längsachse der Leitungselementenanordnung nach außen, während "negativ" eine Richtung nach innen hin zur Längsachse der Leitungselementenanordnung bezeichnet.

Obwohl die genannte radiale Aufweitung der Leitungselemente neben einer hauptsächlichen radialen Erstreckungskomponente immer auch eine axiale Erstreckungskomponente aufweist, bedeutet der Begriff "axiale Verformung der Aufweitung", dass die sich nach dem Stand der Technik im Wesentlichen in radialer Richtung erstreckende Aufweitung zusätzlich noch in axialer Richtung, also parallel zur Längserstreckung der Leitungsanordnung, verformt ist und dadurch eine zusätzliche, axiale Erstreckungskomponente aufweist.

Auf diese Weise lässt sich die nach dem Stand der Technik praktizierte Verpressung der Leitungselement weiter verbessern, wodurch der voll ausgeformte, verpresste Bereich, d. h. die radiale Aufweitung quasi spannungsfrei bleibt, was Relativbewegungen zwischen den Leitungselementen wirksam verhindert und die Ausfallwahrscheinlichkeit der Verbindung bzw. eines hiermit ausgestatteten Entkoppelelements (EKE) reduziert.

Eine äußerst bevorzugte Weiterbildung der erfindungsgemäßen Verbindung sieht vor, dass die wenigstens eine negative Umlenkung in einem der radialen Aufweitung axial (unmittelbar) benachbarten Bereich angeordnet ist. Dies ermöglicht eine Optimierung der weiter oben bereits angesprochenen Spannungsfreiheit in dem radial aufgeweiteten Bereich.

Eine andere, äußerst vorteilhafte Weiterbildung der erfindungsgemäßen Verbindung sieht vor, dass beiderseits der radialen Aufweitung eine negative Umlenkung ausgebildet ist, um die radiale Spannungsfreiheit weiter zu verbessern. Vorzugsweise sind die beiden negativen Umlenkungen symmetrisch bezüglich der radialen Aufweitung angeordnet und höchst vorzugsweise außerdem identisch zueinander ausgebildet.

Eine andere Weiterbildung der erfindungsgemäßen Verbindung sieht vor, dass die wenigstens eine negative Umlenkung in radialer und/oder in axialer Erstreckung kleiner ist als die Aufweitung. Dies trägt einem Grundgedanken der vorliegend Erfindung Rechnung, wonach die eigentliche Verpressung der beiden Leitungselemente im Bereich der radialen Aufweitung erfolgt, während die wenigstens eine negative Umlenkung lediglich für eine verbesserte Spannungsfreiheit in dem verpressten Bereich sorgt.

Im Zuge einer wieder anderen Weiterbildung der erfindungsgemäßen Verbindung kann vorgesehen sein, dass die axiale Aufweitung durch axiales und/oder radiales Stauchen hergestellt wurde.

Des Weiteren kann vorgesehen sein, dass die axiale Verformung der Aufweitung ein Umlegen derselben in axialer Richtung umfasst, welches Umlegen vorzugsweise dergestalt erfolgt, dass anschließend die Aufweitung um etwa 90° in axialer Richtung umgelegt ist. Dies kann dazu führen, dass die Aufweitung in dem umgelegten Bereich etwa parallel zur Längsrichtung der Leitungselementenanordnung orientiert ist. Dies kann für sämtliche, in dem umgelegten Bereich radial übereinanderliegende (Material-)Lagen der Aufweitung bzw. der Leitungselemente gelten.

Es hat sich als vorteilhaft für die erreichbare Spannungsfreiheit erwiesen, wenn die Aufweitung in dem umgelegten Bereich mit Abstand zu der restlichen Leitungselementenanordnung verläuft, d. h. die Aufweitung wird vorteilhafterweise nicht so weit in axialer Richtung umgelegt, dass sie anschließend außen an der restlichen Leitungsanordnung anliegt, obwohl auch eine solche Ausgestaltung grundsätzlich im Bereich der Erfindung liegt.

Es kann vorgesehen sein, dass es sich bei einem der Leitungselemente, vorzugsweise dem äußeren Leitungselement, um ein Rohrleitungselement (Glattrohr) handelt. Des Weiteren kann vorgesehen sein, dass es sich bei einem der Leitungselemente, vorzugsweise dem inneren Leitungselement, um einen Wickelschlauch oder Agraffschlauch (Liner) handelt.

Die Erfindung ist jedoch nicht auf eine derartige Kombination der Leitungselemente beschränkt. Vielmehr können auch beide Leitungselemente als Rohrleitungselemente oder als Wickelschläuche ausgebildet sein. Auch eine Ausgestaltung des inneren Leitungselements als Rohrleitungselement und das äußeren Leitungselements als Wickelschlauch ist möglich.

Ein anderer Aspekt der Erfindung betrifft ein Entkoppelelement für die Abgasanlage eines Kraftfahrzeugs mit Verbrennungsmotor, welches eine erfindungsgemäße Verbindung zwischen zwei konzentrisch angeordneten Leitungselementen umfasst.

Ein dritter Aspekt der Erfindung betrifft eine Weiterentwicklung des Abgasleitungselements aus der WO 2009/056213 A1, welches eine erfindungsgemäße Verbindung zwischen dem dort beschriebenen Außenrohr und dem dort beschriebenen Innenrohr aufweist, vorzugsweise in einem mittleren Bereich zwischen zwei Wellrohrabschnitten des Außenrohrs.

Weitere Eigenschaften und Vorteile der vorliegenden Erfindung ergeben sich aus der nachfolgenden Beschreibung von Ausführungsbeispielen anhand der Zeichnung.
- Figur 1: zeigt ein erstes Ausführungsbeispiel der erfindungsgemäßen Verbindung; und
- Figur 2: zeigt eine Vorstufe des in
- Figur 3: gezeigten Ausführungsbeispiels einer erfindungsgemäßen Verbindung.

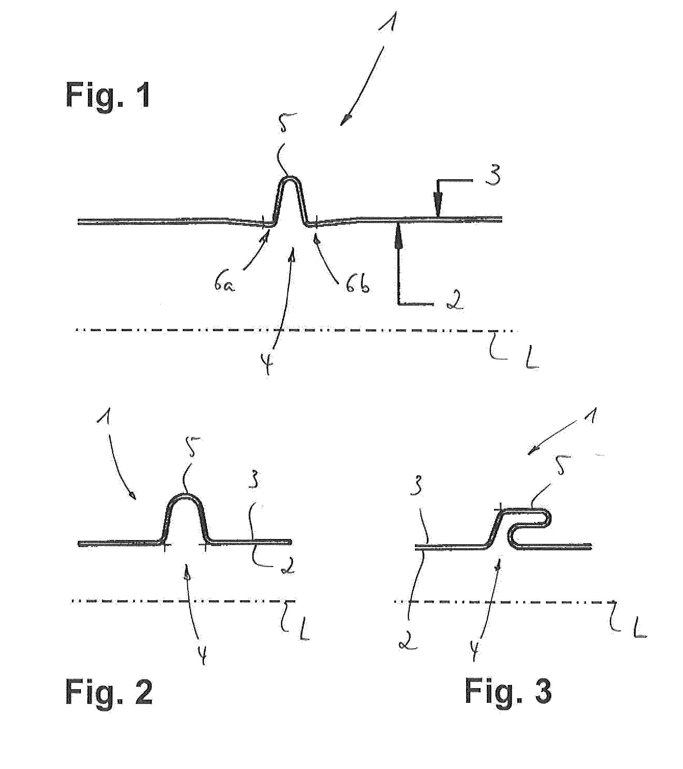

Figur 1 zeigt teilweise und im Längsschnitt eine Leitungselementenanordnung, die in der Gesamtheit mit dem Bezugszeichen 1 bezeichnet ist. Die Leitungselementenanordnung 1 umfasst ein erstes, inneres Leitungselement 2, welches ohne Beschränkung als Wickelschlauch oder Liner ausgebildet ist, sowie ein zweites, äußeres Leitungselement 3, welches als Glattrohr ausgebildet sein kann. Die Leitungselemente 2 und 3 sind konzentrisch bezüglich einer Längsachse L der Leitungselementenanordnung 1 angeordnet. In einem Bereich 4 weist die Leitungselementenanordnung 1 bzw. weisen die Leitungselemente 2, 3 eine radiale Aufweitung 5 auf, die zum Verpressen und damit zum kraftschlüssigen Verbinden der Leitungselemente 2, 3 dient. Insoweit entspricht die bislang beschriebene Anordnung grundsätzlich den Stand der Technik.

Neu gegenüber dem Stand der Technik sind die in Figur 1 gezeigten negativen Umlenkungen der Leitungselementenanordnung 1 unmittelbar rechts und links neben der beschriebenen radialen Aufweitung 5. Diese negativen Umlenkungen sind in Figur 1 mit den Bezugszeichen 6a, 6b bezeichnet. Während die beschriebene radiale Aufweitung 5 mit einer Querschnittsvergrößerung der Leitungselementenanordnung 1 in dem genannten Bereich einhergeht, stellen die genannten negativen Umlenkungen 6a, 6b jeweils eine Querschnittsverkleinerung der Leitungselementenanordnung 1 dar. Dabei sind die negativen Unlenkungen 6a, 6b zumindest in radialer Richtung deutlich kleiner ausgebildet als die radiale Aufweitung 5. Die gesamte Anordnung aus radialer Aufweitung 5 und negativen Umlenkungen 6a und 6b ist symmetrisch bezüglich einer gedachten Mittelachse der radialen Aufweitung 5 senkrecht zur Längsachse L der Leitungselementenanordnung 1 ausgebildet. Allerdings ist die Erfindung nicht hierauf beschränkt.

Die negative Umlenkung 6a, 6b bewirken, dass die auftretenden Kräfte zusätzlich umgelenkt werden, so dass der voll ausgeformte, verpresste Bereich im Bereich der radialen Aufweitung 5 quasi spannungsfrei bleibt, was Relativbewegungen zwischen den Leitungselementen 2, 3 wirksam verhindert und die Ausfallwahrscheinlichkeit der Leitungselementenanordnung 1 bzw. eines damit ausgestatteten EKE deutlich reduziert.

Figur 2 zeigt schematisch eine Vorstufe einer weiteren Ausführungsform der erfindungsgemäßen Erfindung mit bereits ausgeformter radialer Aufweitung 5, welche Vorstufe grundsätzlich dem Stand der Technik entspricht. Die Vorstufe gemäß Figur 2 lässt sich auch zu der Verbindung gemäß Figur 1 weiterbilden, indem anschließend noch die negativen Umlenkungen 6a, 6b hergestellt werden.

Eine andere Weiterentwicklung der Vorstufe in Figur 2 ist in Figur 3 dargestellt. Hierzu wurde die bisherige Ausformung der Verpressung (radiale Aufweitung 5; vgl. Figur 2) noch erhöht, so dass die Verpressung anschließend zusätzlich axial gestaucht und des Weiteren um etwa 90° in radialer Richtung umgelegt werden kann. Diese letzte Zustand ist in Figur 3 dargestellt. Auch hierdurch wird eine Relativbewegung zwischen den Leitungselementen 2 und 3 wirksam verhindert.

Wie aus Figur 3 erkennbar, wurde die radiale Aufweitung 5 nach rechts in radialer Richtung axial gestaucht und weiterhin nach rechts in axialer Richtung umgelegt, so dass sich die einzelnen Lagen, d. h. die Leitungselemente 2 und 3 in dem umgelegten Bereich im Wesentlichen parallel zur Längsachse L der Leitungselementenanordnung 1 erstrecken. Dabei halten die Leitungselemente 2, 3 in dem umgelegten Bereich einen Abstand zueinander und zu der restlichen Leitungselementenanorndung 1 ein. Dies ist gleichbedeutend damit, dass innerhalb der umgelegten radialen Aufweitung 5 ein Freiraum verbleibt bzw. dass die radiale Aufweitung 5 in axialer Richtung nicht flach bis auf die Außenseite der restlichen Leitungselementenanordnung 1 umgelegt wurde. Gleichwohl lägen auch solche Ausführungsformen im Bereich der Erfindung.

Die vorgestellte erfindungsgemäße Lösung baut unmittelbar auf den bislang praktizierten Stand der Technik auf und kommt vollständig ohne zusätzliche Elemente und Maschinen aus. Es ist lediglich noch eine geringfügige weitere Umformung ausgehend von der in Figur 2 dargestellten Lösung nach dem Stand der Technik erforderlich, so dass sich die erfindungsgemäße Lösung ohne größeren Mehraufwand hinsichtlich Kosten und Maschineneinsatz umsetzen lässt.

## Patentansprüche

1. Verbindung zwischen zwei konzentrisch angeordneten Leitungselementen (2, 3), insbesondere für ein Entkoppelelement für die Abgasanlage eines Kraftfahrzeugs mit Verbrennungsmotor, bei der ein erstes, inneres Leitungselement (2) und ein zweites, äußeres Leitungselement (3) im Bereich (4) einer radialen Aufweitung (5) miteinander verpresst sind, **gekennzeichnet durch**
wenigstens eine negative Umlenkung (6a, 6b) der beiden Leitungselemente (2, 3) radial nach innen
und/oder
eine axiale Verformung der Aufweitung (5).

2. Verbindung nach Anspruch 1,
**dadurch gekennzeichnet, dass**
die negative Umlenkung (6a, 6b) in einem der radialen Aufweitung (5) axial benachbarten Bereich angeordnet ist.

3. Verbindung nach Anspruch 1 oder 2,
**dadurch gekennzeichnet, dass**
beiderseits der radialen Aufweitung (5) eine negative Umlenkung (6a, 6b) ausgebildet ist, vorzugsweise symmetrisch bezüglich der radialen Aufweitung (5).

4. Verbindung nach einem der Ansprüche 1 bis 3,
**dadurch gekennzeichnet, dass**
die negative Umlenkung (6a, 6b) in radialer und/oder in axialer Erstreckung kleiner ist als die radiale Aufweitung (5).

5. Verbindung nach einem der Ansprüche 1 bis 4,
**dadurch gekennzeichnet, dass**
die axiale Verformung der Aufweitung (5) durch axiales und/oder radiales Stauchen hergestellt ist.

6. Verbindung nach einem der Ansprüche 1 bis 5,
**dadurch gekennzeichnet, dass**
die axiale Verformung der Aufweitung (5) ein Umlegen derselben in axialer Richtung umfasst.

7. Verbindung nach Anspruch 6,
**dadurch gekennzeichnet, dass**
die Aufweitung (5) um etwa 90° in axialer Richtung umgelegt ist.

8. Verbindung nach Anspruch 6 oder 7,
**dadurch gekennzeichnet, dass**
die Aufweitung (5) in dem umgelegten Bereich etwa parallel zur Längsrichtung der Leitungselementenanordnung orientiert ist.

9. Verbindung nach einem der Ansprüche 6 bis 8,
**dadurch gekennzeichnet, dass**
die Aufweitung (5) in dem umgelegten Bereich mit Abstand zu der restlichen Leitungselementenanordnung verläuft.

10. Verbindung nach einem der Ansprüche 1 bis 9,
**dadurch gekennzeichnet, dass**
wenigstens ein Leitungselement (3), vorzugsweise das äußere Leitungselement (3), als Rohrleitungselement ausgebildet ist.

11. Verbindung nach einem der Ansprüche 1 bis 10,
**dadurch gekennzeichnet, dass**
wenigstens ein Leitungselement, vorzugsweise das innere Leitungselement (2), als Wickelschlauch ausgebildet ist.

12. Entkoppelelement für die Abgasanlage eines Kraftfahrzeugs mit Verbrennungsmotor, mit einer Verbindung gemäß einem der vorangehenden Ansprüche.

13. Abgasleitungselement gemäß WO2009/056213 A1 mit einer Verbindung gemäß einem der vorangehenden Ansprüche 1 bis 11 zwischen Außenrohr und Innenrohr, vorzugsweise in einem mittleren Bereich zwischen zwei Wellrohrabschnitten des Außenrohrs.
